# EUROPEAN PATENT APPLICATION

(11) **EP 4 317 358 A1**
(43) Date of publication of application: **07.02.2024**
(21) Application number: 21934607.9
(22) Date of filing: 26.11.2021
(51) Int. Cl.: C09K 5/14

(54) **COAL-BASED HEAT STORAGE CARBON MATERIAL AND PREPARATION METHOD THEREFOR AND APPLICATION THEREOF, AND COMPOSITION FOR PREPARING COAL-BASED HEAT STORAGE CARBON MATERIAL AND APPLICATION OF COMPOSITION**

(30) Priority: 02.04.2021 CN 202110362066
(71) Applicant: China Energy Investment Corporation Limited, Beijing 100011 (CN); National Institute of Clean-and-Low-Carbon Energy, Beijing 102209 (CN)
(72) Inventor: GAO, Guanghui, Beijing 102209 (CN); WEI, Chang, Beijing 102209 (CN); LIANG, Wenbin, Beijing 102209 (CN); LIU, Junqing, Beijing 102209 (CN); DUAN, Chunting, Beijing 102209 (CN); ZHENG, Dongfang, Beijing 102209 (CN); FENG, Bo, Beijing 102209 (CN); REN, Kai, Beijing 102209 (CN); SHENG, Ying, Beijing 102209 (CN); WEN, Chengyu, Beijing 102209 (CN)
(74) Representative: Kador & Partner Part mbB
(86) International application number: PCT/CN2021/133560
(87) International publication number: WO 2022/205971

(57) **Abstract**

The present invention relates to the technical field of heat storage materials. Disclosed are a coal-based heat storage carbon material and a preparation method therefor and the application thereof, and a composition for preparing a coal-based heat storage carbon material and the application of the composition. The coal-based heat storage material comprises component A and component B. The ID/IG of component A is 0-0.6, and the ID/IG of component B is greater than 1, wherein ID is the height of a D peak obtained by means of a Raman spectrum, and IG is the height of a G peak obtained by means of the Raman spectrum. In the coal-based heat storage material, the crystallite size L_{c} in a c-axis direction obtained by means of XRD is 15-70 nm; the crystallite size Lₐ in an a-axis direction is 15-150 nm; and the interlayer spacing d₀₀₂ of a (002) crystal plane is 3.345-3.370 nm. The coal-based heat storage carbon material contains both a carbon structure having a high strength and a graphite structure having a high thermal conductivity, such that the coal-based heat storage carbon material has both a high compressive strength and a high thermal conductivity.

## Description

### CROSS-REFERENCE TO RELATED APPLICATIONS

This application claims the benefit of Chinese patent application 202110362066.5 filed on April 2, 2021, the contents of which are incorporated herein by reference.

### TECHNICAL FIELD

The invention relates to the technical field of heat storage materials, in particular to a coal-based heat storage carbon material and a preparation method and use thereof, and a composition for preparing a coal-based heat storage carbon material and use of the composition.

### BACKGROUND ART

The existing heat storage carbon material is prepared by using graphite filler or pitch coke, petroleum coke products and asphalt binder as raw materials through mixing, molding, impregnation, roasting and graphitization. Due to the smooth surface of the graphite, its adhesion with the asphalt binder is weak, resulting in cracks, local defects or cracking of the material. Therefore, our solution is to use coal to partially replace graphite. The compatibility of coal and asphalt is better than that of graphite, which can enhance the bonding effect, thereby avoiding defects such as cracking caused by interfacial problems.

CN 112110730A discloses a composition for heat storage material, a heat storage material and a preparation method thereof. The composition comprises asphalt material, graphite and inorganic mineral material, wherein the asphalt material is selected from coal-based asphalt and/or coal-based modified asphalt. The asphalt material has a C/H of 1.3-1.7, and a softening point of greater than or equal to 130 °C, and the residual carbon rate after carbonization is greater than or equal to 66%. Based on the total weight of the composition for the heat storage material, the content of the asphalt material is 10-40 wt%, the content of the graphite is 20-80 wt%, and the content of the inorganic mineral material is 10-70 wt%. The resulting heat storage material simultaneously has high thermal conductivity, compressive strength, and bulk density, and a ratio of compressive strength to thermal conductivity of 0.08-0.25.

CN 112111310A discloses a composition for heat storage carbon material, a heat storage carbon material and a preparation method thereof and the composition comprises asphalt material and graphite, wherein the asphalt material is selected from coal-based asphalt and/or coal-based modified asphalt. The asphalt material has a C/H ratio of 1.3-1.7, and a softening point of greater than or equal to 130 °C, and the residual carbon rate after carbonization is greater than or equal to 66%. Based on the total weight of the composition for the heat storage material, the content of the asphalt material is 10-40 wt%, and the content of the graphite is 60-90 wt%. The heat storage carbon material simultaneously has high thermal conductivity, compressive strength and bulk density, and a ratio of compressive strength to thermal conductivity of 0.08-0.25.

CN 106242570A discloses a method for producing a graphite product for heat storage, which comprises the following steps: S01, batching: batching raw materials including 77-79% by mass of petroleum coke and 21-23% by mass of medium temperature coal-tar pitch; S02, kneading: conducting kneading on the proportioned raw materials to obtain a paste; S03, vibration molding: cooling the kneaded paste, then applying a pressure to the paste and conducting vibration molding according to the technological conditions of: prepressing under a pressure of 2-5 MPa for 3-5min; vibration under a pressure of 6-12 MPa for 10-15 min; a vibration amplitude of 1-1.5 mm, and a frequency of 2500-3000 times per minute; S04, primary roasting to obtain a carbon product; S05, impregnation; S06, secondary roasting; and S07, graphitization. The graphite product has the advantages of large volume density, low ash content and strong heat storage capacity.

CN 107673759A discloses a method for preparing a novel solar thermal power generation graphite heat storage material, which comprises the following steps: material selecting and compounding, to be more specific, selecting needlelike petroleum coke, specific graphite powder and semi-reinforcing carbon black as raw materials, and compounding the needlelike petroleum coke in a weight ratio of 60-70%, the specific graphite powder in a weight ratio of 15-20% and the semi-reinforcing carbon black in a weight ratio of 15-20%, wherein the needlelike petroleum coke has a true density of more than or equal to 2.13 g/cm³, an ash content of less than or equal to 0.25%, a volatile content of less than or equal to 0.30% and a sulfur content of less than or equal to 0.40%, the specific graphite has an electrical resistivity of less than or equal to 8.5 µΩ·m, a flexural strength of more than or equal to 30 MPa, a compressive strength of more than or equal to 65 MPa, an ash content of less than or equal to 0.30% and a particle size in a range of 30-60 µm, and the semi-reinforcing carbon black has an electrical resistivity in a range of 0.6-1.0 µΩ·m, a pH value ranging from 7.5 to 9 and a particle size in a range of 45-60 µm; kneading, to be more specific, performing wet mixing of an adhesive and the raw materials in a mass ratio of 25:75 to 30:70 to obtain a paste; preforming; crushing, grinding, screening and mixing; compression molding; primary roasting; impregnating; secondary roasting and graphitizing. The graphite prepared by the method has excellent physical and chemical properties, and can be widely used in the field of solar thermal power generation graphite heat storage materials.

The above prior art all use petroleum coke or needle coke, which are the most commonly used raw materials in the carbon and graphite industries, and in the latter one, the graphite powder is also added as the raw material, together with the medium-temperature coal tar pitch or reinforcing carbon black as a binding agent, to improve the strength of semi-finished products. In terms of raw materials, they are industrial raw materials with fixed and limited sources, and their new application will eat into the already tight raw material market share of the carbon and graphite industries. In terms of production process, it is performed by mixing, molding and even multiple molding, multiple impregnation roasting and final graphitization, which is long and complex resulting in high energy consumption. In particular, the ratio of compressive strength to thermal conductivity of existing thermal storage materials is low, resulting in defects, such as smooth surface of the thermal storage materials, and difficulty in combining with other thermal storage materials.

### SUMMARY OF THE DISCLOSURE

The purpose of the present invention is to overcome the problems of limited raw material source, complicated process, lengthy production process and high energy consumption associated with the preparation of heat storage materials from carbon and graphite as raw materials in the prior art, to provide a coal-based heat storage material and a preparation method and use thereof and a composition for preparing a coal-based heat storage carbon material. The coal-based heat storage carbon material has both carbon structure with high strength and graphite structure with high thermal conductivity, whereby the coal-based heat storage material possesses high compressive strength as well as high thermal conductivity.

In order to achieve the above objective, a first aspect of the present invention provides a coal-based heat storage carbon material comprising component A and component B;
wherein the ratio of ID/IG of the component A is in the range of 0 to 0.6 and the ratio of ID/IG of the component B is more than 1;
wherein ID is the height of peak D obtained by Raman spectroscopy, and IG is the height of peak G obtained by Raman spectroscopy;
wherein the coal-based heat storage carbon material has a crystallite size L_{c} in c-axis direction of 15 to 70 nm, a crystallite size Lₐ in a-axis direction of 15 to 150 nm and an interlayer spacing d₀₀₂ at a (002) crystal plane of 3.345 to 3.370 nm, obtained by XRD.

A second aspect of the present invention provides a composition for preparing a coal-based heat storage carbon material, which comprises coal, a binder, and an optional thermally conductive filler;
wherein based on the total weight of the composition, the content of the coal is in the range of 10 to 80 wt%, the content of the binder is in the range of 10 to 40 wt%, and the content of the thermally conductive filler is in the range of 0 to 55 wt%;
wherein based on the total weight of the coal, the coal contains 0.5 to 20 wt% of ash and 0 to 30 wt% of volatile, and has a C/H ratio of greater than 2.

A third aspect of the present invention provides a preparation method of a coal-based heat storage carbon material comprising the following steps:
S1: mixing components of a composition to obtain a mixture;
S2: subjecting the mixture to compaction and molding to obtain a molded sample;
S3: roasting the molded sample under vacuum or inert atmosphere to obtain the coal-based heat storage carbon material;

wherein the composition comprises coal, a binder, and an optional thermally conductive filler;
wherein based on the total weight of the composition, the content of the coal is in the range of 10 wt% to 80 wt%, the content of the binder is in the range of 10 wt% to 40 wt%, and the content of the thermally conductive filler is in the range of 0 wt% to 55 wt%;
wherein based on the total weight of the coal, the coal contains 0.5 wt% to 20 wt% ash and 0 wt% to 30 wt% volatile, and has a C/H ratio of greater than 2.

A fourth aspect of the present invention provides a coal-based heat storage carbon material prepared by the above preparation method.

A fifth aspect of the present invention provides use of the coal-based heat storage carbon material or the above-mentioned composition for preparing the coal-based heat storage carbon material in at least one of a heat storage process, a heat transfer process, a heat conduction process and a heat release process.

The following beneficial effects can be achieved through the above technical solutions of the coal-based heat storage carbon material, its preparation method and use, and the composition for preparing the coal-based heat storage carbon material provided by the present invention.

The coal-based heat storage carbon material provided by the present invention has a special structure similar to graphite, which makes it have high compressive strength as well as high thermal conductivity.

In the present invention, the coal type is selected according to the structural characteristics and then pretreated at high temperature to obtain high temperature pretreated coal with a special structure which is mixed with a binder and an optional thermally conductive filler, molded and primary roasted to produce a coal-based heat storage carbon material with high compressive strength and high thermal conductivity simultaneously.

In the preparation method of the coal-based heat storage carbon material provided by the present invention, not only coal resources are fully utilized, thus improving their effective utilization and broadening the raw material source of the heat storage carbon material, but also a heat storage material with high performance is obtained and the process is shortened which makes the preparation process simple and easy to operate, thereby saving energy and improving the added value of coal products. In addition, the obtained coal-based heat storage carbon material still has great advantages over magnesia brick and concrete.

### BRIEF DESCRIPTION OF DRAWINGS

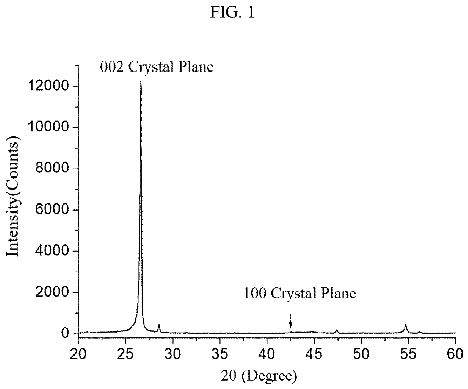

FIG. 1 is an XRD pattern of the coal-based heat storage carbon material according to Example 1.

### DETAILED DESCRIPTION

The endpoints and any values of the ranges disclosed herein are not limited to that exact range or value, and these ranges or values should be understood to contain values close to those ranges or values. For ranges of values, the endpoints of each range, the endpoints of each range and the individual point values, and the individual point values can be combined with each other to yield one or more new ranges of values which should be considered as specifically disclosed herein.

A first aspect of the present invention provides a coal-based heat storage carbon material comprising component A and component B;
wherein the ratio of ID/IG of the component A is in the range of 0 to 0.6 and the ratio of ID/IG of the component B is more than 1;
wherein ID is the height of peak D obtained by Raman spectroscopy, and IG is the height of peak G obtained by Raman spectroscopy;
wherein the coal-based heat storage carbon material has a crystallite size L_{c} in c-axis direction of 15 to 70 nm, a crystallite size Lₐ in a-axis direction of 15 to 150 nm and an interlayer spacing d₀₀₂ at a (002) crystal plane of 3.345 to 3.370 nm, obtained by XRD.

The coal-based heat storage carbon material provided by the present invention comprises components A and B with specific ID/IG ranges, and Lc, La and d₀₀₂ of the coal-based heat storage carbon material are in the above ranges. The XRD pattern shown in FIG. 1 shows that the coal-based heat storage carbon material has structural characteristics similar to graphite, whereby it has not only high compressive strength, but also high thermal conductivity.

In the present invention, the component A has a graphite-like structure, while the component B comprises both a graphite structure and an amorphous carbon structure.

Further, the ratio of ID/IG of the component A is in the range of 0 to 0.6 and the ratio of ID/IG of the component B is more than 1.05.

Further, the coal-based heat storage carbon material has a crystallite size L_{c} in c-axis direction of 20 to 65 nm, a crystallite size Lₐ in a-axis direction of 20 to 140 nm and an interlayer spacing d₀₀₂ at a (002) crystal plane of 3.345 to 3.370 nm, obtained by XRD.

According to the present invention, the ratio of compressive strength to thermal conductivity of the coal-based heat storage carbon material is 0.3 to 0.8.

Further, the ratio of compressive strength to thermal conductivity of the coal-based heat storage carbon material is 0.32 to 0.8.

According to the present invention, the coal-based heat storage carbon material has a bulk density of 1.7 to 2 g/cm³, a thermal conductivity of 10 to 200 W/mK, and a compressive strength of 18 to 50 MPa.

In the present invention, the compressive strength of the heat storage carbon material is measured according to GBT1431-2019, the thermal conductivity is measured according to ASTM E1461, and the bulk density is measured according to GB/T24528-2009.

A second aspect of the present invention provides a composition for preparing a coal-based heat storage carbon material, which comprises coal, a binder, and an optional thermally conductive filler;
wherein based on the total weight of the composition, the content of the coal is in the range of 10 to 80 wt%, the content of the binder is in the range of 10 to 40 wt%, and the content of the thermally conductive filler is in the range of 0 to 55 wt%;
wherein based on the total weight of the coal, the coal contains 0.5 to 20 wt% of ash and 0 to 30 wt% of volatile, and has a C/H ratio of greater than 2.

In the present invention, the coal having an ash content, a volatile content, and a C/H ratio in the above-mentioned ranges, combined with a binder and an optional thermally conductive filler, is used as a raw material of a composition for preparing coal-based heat storage carbon material. When the composition is used as a raw material for preparing the coal-based heat storage carbon material, it not only reduces the cost significantly by reducing the amount of natural flake graphite, but more importantly, it can improve the thermal conductivity and compressive strength of the resulting coal-based heat storage carbon material without the need for graphitization.

In the present invention, the ash content and volatile content of the coal are measured according to GB/T 212-2008.

In the present invention, the C/H ratio of coal is measured according to GB/T 476-2008 (i.e., the determination of carbon and hydrogen in the coal).

In the present invention, when the amount of each component of the composition used for preparing the coal-based heat storage carbon material is in the above range, the prepared coal-based heat storage carbon material has high thermal conductivity and high compressive strength.

Further preferably, based on the total weight of the composition, the content of the coal is in the range of 15 to 70 wt%, the content of the binder is in the range of 10.1 to 35 wt%, and the content of the thermally conductive filler is in the range of 10 to 50 wt%.

Further preferably, based on the total weight of the coal, the coal contains 0.5 to 5 wt% of ash and 5 to 20 wt% of volatile, and has a C/H ratio of 2.2 to 4.2.

According to the present invention, the coal has a crystallite size L_{c} in c-axis direction of 20 to 65 nm, a crystallite size Lₐ in a-axis direction of 17.66 to 140 nm and an interlayer spacing d₀₀₂ at a (002) crystal plane of 3.345 to 3.370 nm, obtained by XRD.

In the present invention, the coal with the above-mentioned microstructure has a crystal structure similar to that of the flake graphite, so that the coal-based heat storage carbon material prepared by the composition has high thermal conductivity and high compressive strength.

In the present invention, the coal with the above-mentioned microstructure is pretreated at high temperature.

In the present invention, the conditions of the high temperature pretreatment comprise a pretreatment temperature of 1050 to 3000 °C and a pretreatment time of 30 to 120 minutes.

In the present invention, after the coal is pretreated at a high temperature of more than or equal to 2000°C, its density can be increased and its structure can be changed, thus obtaining the pretreated coal with the above-mentioned specific microstructure and a crystal structure similar to that of the flake graphite.

Further preferably, the coal has a crystallite size L_{c} in c-axis direction of 20 to 53.46 nm, preferably 20.09 to 40 nm, a crystallite size Lₐ in a-axis direction of 20 to 118 nm, preferably 40 to 60 nm, and an interlayer spacing d₀₀₂ at a (002) crystal plane of 3.349 to 3.368 nm, preferably 3.355 to 3.365 nm, obtained by XRD.

According to the present invention, the binder is pitch, preferably mesophase pitch.

In the present invention, the mesophase content of the mesophase pitch is 20 to 100 wt%, preferably 30 to 95 wt%.

In the present invention, the mesophase content of the mesophase pitch is measured according to GBT 38396-2019 (i.e., Coking pitch products-Determination of mesophase content-Microscopical analysis by reflected light).

According to the present invention, the softening point of the binder is 80 to 350 °C.

In the present invention, the pitch with a softening point of 80 to 350 °C is used as a binder, and combined with the above-mentioned coal and the optional thermally conductive filler to obtain a composition. The compressive strength and thermal conductivity of the coal-based heat storage carbon material prepared can be significantly improved by using the composition as raw material.

In the present invention, the softening point of the binder is measured by ring and ball method.

Further preferably, the softening point of the binder is 85 to 330 °C.

According to the present invention, the thermally conductive filler is selected from natural flake graphite and/or artificial graphite.

According to the present invention, the thermally conductive filler has a crystallite size L_{c} in c-axis direction of 20 to 60 nm, a crystallite size Lₐ in a-axis direction of 40 to 80 nm and an interlayer spacing d₀₀₂ at a (002) crystal plane of 3.350 to 3.369 nm, obtained by XRD.

According to the present invention, based on the total weight of the thermally conductive filler, the carbon content is 50 to 100 wt%.

According to the present invention, the graphitization degree of the thermally conductive filler is 80% to 100%.

In the present invention, preferably, the natural flake graphite and/or artificial graphite with the above-mentioned structural characteristics, carbon content or graphitization degree as thermally conductive materials are combined with the above-mentioned coal and the above-mentioned optional thermally conductive filler to obtain a composition. The compressive strength and thermal conductivity of the prepared coal-based heat storage carbon material can be further improved by using the composition as raw material.

In the present invention, the carbon content of the thermally conductive filler is measured by GB/T 3521-2008 (i.e., Method for chemical analysis of graphite) and the graphitization degree of the thermally conductive filler is measured by XRD.

Further preferably, the thermally conductive filler has a crystallite size L_{c} in c-axis direction of 20 to 50 nm, a crystallite size Lₐ in a-axis direction of 50 to 80 nm and an interlayer spacing d₀₀₂ at a (002) crystal plane of 3.350 to 3.368 nm, obtained by XRD.

Based on the total weight of the thermally conductive filler, the carbon content is 70 to 99.9 wt%.

The graphitization degree of the thermally conductive filler is 80% to 100%.

A third aspect of the present invention provides a preparation method of a coal-based heat storage carbon material, which comprises the following steps:
S1: mixing components of a composition to obtain a mixture;
S2: subjecting the mixture compaction and molding to obtain a molded sample;
S3: roasting the molded sample under vacuum or inert atmosphere to obtain the coal-based heat storage carbon material;

wherein the composition comprises coal, a binder, and an optional thermally conductive filler;
wherein based on the total weight of the composition, the content of the coal is in the range of 10 to 80 wt%, the content of the binder is in the range of 10 to 40 wt%, and the content of the thermally conductive filler is in the range of 0 to 55 wt%;
wherein based on the total weight of the coal, the coal contains 0.5 to 20 wt% of ash and 0 to 30 wt% of volatile, and has a C/H ratio of greater than 2.

In the present invention, the coal with ash content, volatile content and the C/H ratio satisfying the above conditions, combined with a binder and an optional thermally conductive filler, is used as raw material of a composition for preparing coal-based heat storage carbon material. Since the coal with the above characteristics has a structure similar to graphite, when it is used as a raw material to prepare the coal-based heat storage carbon material, it not only reduces the cost by reducing the amount of natural flake graphite, but more importantly, it can significantly improve thermal conductivity and compressive strength of the resulting coal-based heat storage carbon material without the need for graphitization.

According to the present invention, based on the total weight of the composition, the content of the coal is in the range of 15 to 70 wt%, the content of the binder is in the range of 10.1 to 35 wt%, and the content of the thermally conductive filler is in the range of 10 to 50 wt%.

In the preparation method of the present invention, the coal, the binder and the thermally conductive filler are as described in the second aspect of the present invention, which will not be repeated here.

According to the present invention, the method further comprises a step of pretreating the coal at a high temperature prior to step S1.

In the present invention, the coal is pretreated at a high temperature before mixing with the binder and the optional thermally conductive filler, which can dramatically increase the densification degree of the coal, thereby significantly improving the thermal conductivity and compressive strength of the coal-based heat storage carbon material prepared.

In order to achieve the densification of the coal structure, the inventors found that when the conditions of the high temperature pretreatment comprise a pretreatment temperature of 1050 to 3000 °C and a pretreatment time of 5 to 120 minutes, the pretreated coal has a structure similar to graphite.

Further preferably, the conditions of the high temperature pretreatment comprise a pretreatment temperature of 1100 to 2900 °C and a pretreatment time of 30 to 120 minutes.

In the present invention, the coal after the high temperature pretreatment is preferably crushed to obtain high temperature pretreated coal particles of 50 mesh or less.

According to the present invention, the mixing condition in step S1 comprises a mixing temperature of 150 to 210 °C.

In the present invention, the coal, the binder and the optional thermally conductive filler are mixed at the above-mentioned mixing temperature. Under the high temperature, the binder can maintain a flowing state, and the flowing binder can be fully and uniformly coated on the surface of the particles of the coal and the thermally conductive filler during the mixing process, so that the resulting coal-based heat storage carbon material has high compressive strength and high thermal conductivity.

Further preferably, the mixing condition comprises a mixing temperature of 150 to 200 °C.

In the present invention, there is no special limit to the mixing time, as long as the coal, the binder and the optional thermally conductive filler can be sufficiently and uniformly mixed.

According to the present invention, the molding conditions in step S2 comprise a molding temperature of 105 to 200 °C, a molding pressure of 10 to 100 MPa, and a molding time of 1 to 30 minutes.

In the present invention, the mixture is molded under the above-mentioned molding conditions, and a high-strength green body can be obtained, so that the resulting coal-based heat storage carbon material has high compressive strength and high thermal conductivity.

Further preferably, the molding conditions comprise a molding temperature of 110 to 150 °C, a molding pressure of 15 to 50 MPa, and a molding time of 5 to 30 minutes.

According to the present invention, conditions for roasting in step S3 comprise a roasting temperature of 800 to 1300 °C and a roasting time of 30 to 120 minutes.

In the present invention, the molded sample is roasted under the above roasting conditions, which can improve the density of the product and reduce its porosity, so that the resulting coal-based heat storage carbon material has high compressive strength and high thermal conductivity.

Further preferably, the roasting conditions comprise a roasting temperature of 850 to 1000 °C and a roasting time of 30 to 110 minutes.

In the present invention, the molded sample is roasted under vacuum or inert atmosphere which can prevent the surface of the molding material from being oxidized during the roasting process, thereby improving the compressive strength and thermal conductivity of the prepared heat storage carbon material.

A fourth aspect of the present invention provides a coal-based heat storage carbon material prepared by the above preparation method.

A fifth aspect of the present invention provides use of the coal-based heat storage carbon material or the composition for preparing the coal-based heat storage carbon material above mentioned in at least one of a heat storage process, a heat transfer process, a heat conduction process, and a heat release process.

The present invention will be described in detail below by means of examples. In the following examples, the bulk density of the heat storage carbon material was measured according to the method of GB/T 24528-2009; the thermal conductivity of the heat storage carbon material was measured according to the method of ASTM E1461; the compressive strength of the heat storage carbon material was measured according to the method of GB/T 1431-2019; the composition of the heat-storage carbon materials and the orientation of each component were measured by Raman spectroscopy; the cell parameters of the heat storage carbon material were measured by XRD; the ash content and volatile content of the coal were measured according to the method of GB/T 212-2008; the C/H ratio of the coal was measured by the method of determination of carbon and hydrogen in coal of GB/T 476-2008; the softening point of the binder was measured by ring and ball method; the carbon content of the thermally conductive filler was measured by method for chemical analysis of graphite of GB/T 3521-2008; and the graphitization degree of the thermally conductive filler and the crystalline structure of the coal were measured by XRD.

The raw materials used in the examples and comparative examples are all commercially available.

### Example 1

A composition for a coal-based heat storage carbon material comprised 20 wt% of coal, 50 wt% of natural graphite and 30 wt% of pitch. Among them, the coal had an ash content of 3.7 wt%, a volatile content of 4.1 wt% and a C/H ratio of 3.2; the natural graphite had a L_{c} of 48.6 nm, a Lₐ of 79.58 nm, a d₀₀₂ of 3.353 nm, a carbon content of 83.7 wt% and a graphitization degree of 100%; and the softening point of the pitch was 100 °C.

The coal-based heat storage carbon material was prepared according to the following steps:
(1) subjecting the coal to pretreatment at 2200 °C for 120 minutes to obtain pretreated coal, and crushing the high temperature pretreated coal to obtain coal particles of 50 mesh or less; wherein, the pretreated coal had a L_{c} of 22.83 nm, a Lₐ of 43.08 nm, a d₀₀₂ of 3.364 nm, an ash content of 5 wt%, and a volatile content of 0 wt%;
(2) mixing the coal particles, natural graphite and pitch according to the percentage content of the above composition at 200°C to obtain a mixture;
(3) subjecting the mixture to molding at a temperature of 110 °C and a pressure of 20 MPa for 10 minutes to obtain a molded sample;
(4) roasting the molded sample at 950 °C for 2.5 hours to obtain the coal-based heat storage carbon material A1.

The XRD pattern of the coal-based heat storage carbon material A1 is shown in FIG. 1. The specific test conditions for XRD comprise a Cu Kα radiation (λ=1.5406 Å), an X-ray tube voltage of 40 kV, an X-ray tube current of 40 mA, a scanning rate of 2.5 °/min, a step size of 0.02 °, and a continuous scanning in the range of 10 to 90 ° for 2θ. It can be seen from FIG. 1 that there are both graphite structure (002 peak) and amorphous carbon structure (100 peak) in the coal-based heat storage carbon material.

### Example 2

A composition for a coal-based heat storage carbon material comprised 15 wt% of coal, 45 wt% of natural graphite, 8 wt% of artificial graphite and 32 wt% of pitch. Among them, the coal had an ash content of 3.7 wt%, a volatile content of 4.1 wt% and a C/H ratio of 3.2; the natural graphite had a L_{c} of 48.6 nm, a Lₐ of 79.58 nm, a d₀₀₂ of 3.35258 nm, a carbon content of 83.7 wt% and a graphitization degree of 100%; the artificial graphite had a L_{c} of 24.68 nm, a Lₐ of 61.6 nm, a d₀₀₂ of 3.36577 nm, a carbon content of 92 wt% and a graphitization degree of 87.68%; and the softening point of the pitch was 87 °C.

The coal-based heat storage carbon material was prepared according to the following steps:
(1) subjecting the coal to pretreatment at 1200 °C for 60 minutes to obtain high temperature pretreated coal, and crushing the high temperature pretreated coal to obtain coal particles of 50 mesh or less; wherein, the pretreated coal had an ash content of 5 wt%, and a volatile content of 0 wt%;
(2) mixing the coal particles, natural graphite, artificial graphite and pitch according to the percentage content of the above composition at 200 °C to obtain a mixture;
(3) subjecting the mixture to molding at a temperature of 110 °C and a pressure of 20 MPa for 10 minutes to obtain a molded sample;
(4) roasting the molded sample at 950 °C for 2.5 hours to obtain the coal-based heat storage carbon material A2.

### Example 3

A coal-based heat storage carbon material was prepared according to the method of Example 1, except that coal was used instead of the natural graphite, that is, the composition comprised 70 wt% of coal, 0 wt% of natural graphite and 30 wt% of pitch. The coal-based heat storage carbon material A3 was obtained.

### Example 4

A coal-based heat storage carbon material was prepared according to the method of Example 1, except that raw coal (the coal with an ash content of 3.7 wt%, a volatile content of 4.1 wt% and a C/H ratio of 3.2) without pretreatment was directly used in step (1). The coal-based heat storage carbon material A4 was obtained.

### Comparative Example 1

A heat storage carbon material was prepared according to the method of Example 1, except that the composition for the heat storage carbon material comprised 70 wt% of natural graphite and 30 wt% of pitch.

The heat storage carbon material was prepared according to the following steps:
(1) mixing the natural graphite and pitch according to the percentage content of the above composition at 200 °C to obtain a mixture;
(2) subjecting the mixture to molding at a temperature of 110 °C and a pressure of 20 MPa for 10 minutes to obtain a molded sample;
(3) roasting the molded sample at 950 °C for 2.5 hours to obtain the heat storage carbon material B1.

### Comparative Example 2

A coal-based heat storage carbon material was prepared according to the method of Example 1, except that in step (1), the content of coal was 5%, the content of binder was 5%, and the content of thermally conductive filler was 90%. The heat storage carbon material B2 was obtained.

### Comparative Example 3

A coal-based heat storage carbon material was prepared according to the method of Example 1, except that the coal had an ash content of 25 wt%, a volatile content of 35 wt% and a C/H ratio of 1.5 in step (1). The heat storage carbon material B3 was obtained.

The structural and performance characteristics of the heat storage carbon materials prepared in Examples 1-4 and Comparative Examples 1-3 are shown in Table 1 and Table 2, respectively.

**Table 1**

| Sample | ID/IG | | Lₐ/nm | L_{c}/nm | d₀₀₂/nm |
|---|---|---|---|---|---|
| | Composition A | Composition B | | | |
| A1 | 0.17-0.35 | 1.14-2.67 | 24.29 | 43.92 | 3.3575 |
| A2 | 0.2-0.40 | 1.07-2.10 | 30.55 | 51.04 | 3.3557 |
| A3 | 0.37-0.60 | 1.33-2.15 | 27.64 | 20.09 | 3.3682 |
| A4 | 0.19-0.50 | 1.19-3.92 | 80.80 | 52.28 | 3.3567 |
| B1 | 0.3-0.45 | 1.17-2.06 | 160.9 | 63.57 | 3.3574 |
| B2 | 0.15-0.45 | - | 89.68 | 55.77 | 3.5258 |
| B3 | 0.2-0.95 | 1.06-1.87 | 103.08 | 53.83 | 3.3639 |

**Table 2**

| Sample | Bulk Density (g/cm³) | Thermal Conductivity (W/mK) | Compressive Strength (MPa) | Compressive Strength/Thermal Conductivity |
|---|---|---|---|---|
| A1 | 1.87 | 81.01 | 26.97 | 0.33 |
| A2 | 1.82 | 63.18 | 24.08 | 0.38 |
| A3 | 1.83 | 50.76 | 37.8 | 0.74 |
| A4 | 1.72 | 41.45 | 32.32 | 0.78 |
| B1 | 2.02 | 207.1 | 9.3 | 0.04 |
| B2 | 1.61 | 103.2 | 5.9 | 0.03 |
| B3 | 1.58 | 77.9 | 13.8 | 0.18 |

It can be seen from the data in Table 1 and Table 2 that the coal-based heat storage carbon materials provided by the Examples of the present invention comprise component A with a specific ID/IG and component B with a specific ID/IG. In addition, when the d₀₀₂ and crystallite size of the coal-based heat storage carbon material are in the ranges of the limitations of the present invention, the coal-based heat storage carbon material exhibits significantly improved compressive strength while maintaining high thermal conductivity. Additionally, the ratio of compressive strength to thermal conductivity is remarkably increased.

Furthermore, by subjecting coal to high temperature pretreatment, specifically at a temperature of 2000 °C or more, the resulting coal-based heat storage material exhibits further improved compressive strength compared to untreated coal.

The preferred embodiments of the present invention have been described in detail above. However, the present invention is not limited thereto. Within the scope of the technical concept of the present invention, a variety of simple modifications can be made to the technical solutions of the present invention, including the combination of various technical features in any other suitable manner. These simple modifications and combinations should also be regarded as the content disclosed in the present invention. All belong to the protection scope of the present invention.

## Claims

1. A coal-based heat storage carbon material, wherein the coal-based heat storage material comprises component A and component B;
wherein a ratio of ID/IG of the component A is in a range of 0 to 0.6 and a ratio of ID/IG of the component B is more than 1;
wherein ID is a height of peak D obtained by Raman spectroscopy, and IG is a height of peak G obtained by Raman spectroscopy; and
wherein the coal-based heat storage carbon material has a crystallite size L_{c} in c-axis direction of 15 to 70 nm, a crystallite size Lₐ in a-axis direction of 15 to 150 nm and an interlayer spacing d₀₀₂ at a (002) crystal plane of 3.345 to 3.370 nm, obtained by XRD.

2. The coal-based heat storage carbon material according to claim 1, wherein a ratio of compressive strength to thermal conductivity of the coal-based heat storage carbon material is 0.3 to 0.8.

3. The coal-based heat storage carbon material according to claims 1 or 2, wherein the coal-based heat storage carbon material has a bulk density of 1.7 to 2 g/cm³, a thermal conductivity of 10 to 200 W/mK, and a compressive strength of 18 to 50 MPa.

4. A composition for preparing a coal-based heat storage carbon material, wherein the composition comprises coal, a binder, and an optional thermally conductive filler;
wherein based on total weight of the composition, a content of the coal is in a range of 10 to 80 wt%, a content of the binder is in a range of 10 to 40 wt%, and a content of the thermally conductive filler is in a range of 0 to 55 wt%;
wherein based on total weight of the coal, the coal contains 0.5 to 20 wt% of ash and 0 to 30 wt% of volatile; and
wherein the coal has a C/H ratio of greater than 2.

5. The composition according to claim 4, wherein based on total weight of the composition, a content of the coal is in a range of 15 to 70 wt%, a content of the binder is in a range of 10.1 to 35 wt%, and a content of the thermally conductive filler is in a range of 10 to 50 wt%;
preferably, based on total weight of the coal, the coal contains 0.5 to 5 wt% of ash and 5 to 20 wt% of volatile, and has a C/H ratio of 2.2 to 4.2.

6. The composition according to claims 4 or 5, wherein the coal has an interlayer spacing d₀₀₂ at a (002) crystal plane of 3.345 to 3.370 nm, a crystallite size L_{c} in c-axis direction of 20 to 65 nm, and a crystallite size Lₐ in a-axis direction of 17.66 to 140 nm, obtained by XRD.

7. The composition according to any one of claims 3 to 6, wherein the binder is pitch, preferably mesophase pitch;
preferably, the binder has a softening point of 80 to 350 °C.

8. The composition according to any one of claims 3 to 7, wherein the thermally conductive filler is selected from natural flake graphite and/or artificial graphite;
preferably, the thermally conductive filler has a crystallite size L_{c} in c-axis direction of 20 to 60 nm, a crystallite size Lₐ in a-axis direction of 40 to 80 nm and an interlayer spacing d₀₀₂ at a (002) crystal plane of 3.350 to 3.369 nm, obtained by XRD;
preferably, based on total weight of the thermally conductive filler, the thermally conductive filler has a carbon content of 50 to 100 wt%;
preferably, the thermally conductive filler has a graphitization degree of 80% to 100%.

9. A method for preparing a coal-based heat storage carbon material, wherein the method comprises steps of:
S1: mixing components of a composition to obtain a mixture;
S2: subjecting the mixture to compaction and molding to obtain a molded sample;
S3: roasting the molded sample under vacuum or inert atmosphere to obtain the coal-based heat storage carbon material;
wherein the composition comprises coal, a binder, and an optional thermally conductive filler;
wherein based on total weight of the composition, a content of the coal is in a range of 10 to 80 wt%, a content of the binder is in a range of 10 to 40 wt%, and a content of the thermally conductive filler is in a range of 0 to 55 wt%; and
wherein based on total weight of the coal, the coal contains 0.5 to 20 wt% of ash and 0 to 30 wt% of volatile, and has a C/H ratio of greater than 2.

10. The method according to claim 9, wherein based on total weight of the composition, a content of the coal is in a range of 15 to 70 wt%, a content of the binder is in a range of 10.1 to 35 wt%, and a content of the thermally conductive filler is in a range of 10 to 50 wt%;
preferably, based on total weight of the coal, the coal contains 0.5 to 5 wt% of ash and 5 to 20 wt% of volatile, and has a C/H ratio of 2.2 to 4.2.

11. The method according to claims 9 or 10, wherein the coal has an interlayer spacing d₀₀₂ at a (002) crystal plane of 3.345 to 3.370 nm, a crystallite size L_{c} in c-axis direction of 20 to 65 nm, and a crystallite size Lₐ in a-axis direction of 17.66 to 140 nm, obtained by XRD.

12. The composition according to any one of claims 9 to 11, wherein the binder is pitch, preferably mesophase pitch;
preferably, the binder has a softening point of 80 to 350 °C.

13. The composition according to any one of claims 9 to 12, wherein the thermally conductive filler is selected from natural flake graphite and/or artificial graphite;
preferably, the thermally conductive filler has a crystallite size L_{c} in c-axis direction of 20 to 60 nm, a crystallite size Lₐ in a-axis direction of 40 to 80 nm and an interlayer spacing d₀₀₂ at a (002) crystal plane of 3.350 to 3.369 nm, obtained by XRD;
preferably, based on total weight of the thermally conductive filler, the thermally conductive filler has a carbon content of 50 to 100 wt%;
preferably, the thermally conductive filler has a graphitization degree of 80% to 100%.

14. The method according to any one of claims 9 to 13, wherein the method further comprises a step of pretreating the coal at a high temperature prior to step S 1;
preferably, conditions for pretreating the coal at a high temperature comprise a pretreatment temperature of 1050 to 3000 °C and a pretreatment time of 30 to 120 minutes.

15. The method according to any one of claims 9 to 14, wherein condition for mixing in step S1 comprises a mixing temperature of 150 to 210 °C.

16. The method according to any one of claims 9 to 15, wherein conditions for molding in step S2 comprise a molding temperature of 105 to 200 °C, a molding pressure of 10 to 100 MPa, and a molding time of 1 to 30 minutes.

17. The method according to any one of claims 9 to 16, wherein conditions for roasting in step S3 comprise a roasting temperature of 800 to 1300 °C and a roasting time of 0.5 to 2 hours.

18. A coal-based heat storage carbon material prepared by the method according to any one of claims 9 to 17.

19. Use of the coal-based heat storage carbon material according to any one of claims 1 to 3 and claim 18 or the composition for preparing the coal-based heat storage carbon material according to any one of claims 4 to 8 in at least one of a heat storage process, a heat transfer process, a heat conduction process, and a heat release process.
